# DEMANDE DE BREVET EUROPEEN

(11) **EP 1 832 974 A1**
(43) Date de publication de la demande: **12.09.2007**
(21) Numéro de dépôt: 07103632.1
(22) Date de dépôt: 06.03.2007
(51) Int. Cl.: G06F 7/72, H04L 9/06

(54) **Protection EMA d'un calcul par un circuit électronique**

(30) Priorité: 06.03.2006 FR 0650766
(71) Demandeur: ST MICROELECTRONICS S.A., 92120 Montrouge (FR)
(72) Inventeur: Romain, Fabrice, 83560 Rians (FR)
(74) Mandataire: de Beaumont, Michel

(57) **Abrégé**

L'invention concerne un procédé de masquage d'une quantité numérique (e) utilisée par un calcul exécuté par un circuit électronique et comportant plusieurs itérations comportant chacune au moins une opération (36, 37) fonction d'au moins une valeur dépendant de ladite quantité numérique, le procédé comportant au moins une première étape (40') de déplacement d'au moins un opérande (R0) de l'opération dans un élément de mémorisation choisi (ADDO) indépendamment de ladite valeur.

## Description

### Domaine de l'invention

La présente invention concerne de façon générale les circuits électroniques et, plus particulièrement, la protection de quantités secrètes manipulées par de tels circuits, en particulier contre des attaques par mesures d'un rayonnement électromagnétique.

Un exemple d'application de la présente invention concerne les cartes à puce.

### Exposé de l'art antérieur

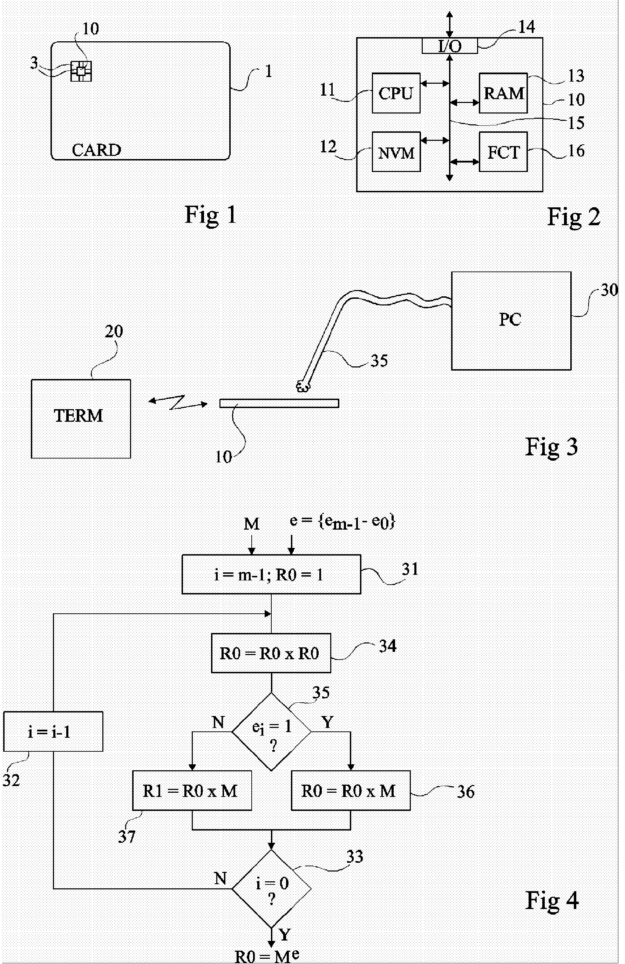

La figure 1 représente de façon très schématique une carte à puce 1 du type à laquelle s'applique à titre d'exemple la présente invention. Une puce 10 de circuit intégré est encartée dans la carte 1 en matière plastique et est reliée à des contacts électriques 3 pour communication avec un lecteur de carte (non représenté). La carte peut également être pourvue d'un système de communication sans contact (transpondeur électromagnétique).

La figure 2 représente, de façon très schématique et sous forme de blocs, des constituants d'un circuit intégré 10 d'une carte à puce de la figure 1. Le circuit ou la puce 10 comporte une unité centrale de traitement 11 (CPU), un ou plusieurs éléments 12 de mémorisation non volatile (NVM) et un ou plusieurs éléments de mémorisation volatile 13 (par exemple, de type RAM ou registre). Les différents constituants de la puce 10 communiquent entre eux et avec un dispositif 14 d'entrée/sortie (I/O) relié aux contacts 3, par un ou plusieurs bus 15 de données, d'adresses et de commandes. Le plus souvent, la puce 10 comporte d'autres fonctions 16 (FCT), par exemple, des circuits réalisant des opérations cryptographiques.

La présente invention s'applique plus particulièrement aux circuits électroniques manipulant des quantités censées rester secrètes, c'est-à-dire qui ne doivent pas être accessibles depuis l'extérieur du circuit au moins pour un utilisateur non autorisé. Des calculs cryptographiques sont utilisés pour des fonctions de sécurité telles que des authentifications, des signatures électroniques, etc. Ces calculs utilisent des clés secrètes que des fraudeurs cherchent à découvrir.

De nombreuses méthodes sont connues pour tenter de découvrir des quantités numériques manipulées par un circuit électronique, qu'il s'agisse d'un processeur tel qu'illustré par la figure 2 ou d'un circuit en logique câblée, reprogrammable (FPGA) ou non.

Une première catégorie d'attaques consiste à exploiter des dysfonctionnements intentionnels du circuit. De telles attaques connues sous la dénomination DFA (pour Differential Fault Analysis) interprètent des résultats fournis par le circuit électronique suite à des perturbations dans son fonctionnement. De telles perturbations peuvent provenir de pics parasites sur l'alimentation du circuit (glitch attack), de rayonnements lumineux, de chocs thermiques, etc.

Une deuxième catégorie d'attaques à laquelle s'applique la présente invention concerne les attaques dites par canaux cachés qui exploitent une information détectable de l'extérieur du circuit pendant les calculs cryptographiques sans intervenir sur les entrées/sorties du circuit. Dans cette catégorie, on connaît des attaques exploitant le temps d'exécution (timing attack), l'analyse directe du courant consommé par le circuit électronique (SPA pour Simple Power Analysis), l'analyse différentielle du courant consommé (DPA pour Differential Power Analysis), l'analyse du rayonnement électromagnétique émis par le circuit (EMA pour Electromagnetic Analysis) qu'elle soit directe ou différentielle (DEMA pour Differential Electromagnetic Analysis).

La figure 3 illustre, de façon très schématique et sous forme de blocs, une attaque par analyse électromagnétique. Un circuit électronique 10 communique avec un terminal 20 (TERM), par exemple un lecteur de carte à puce que ce soit avec ou sans contact. Dans le cas d'un circuit 10 dépourvu d'alimentation autonome, son énergie lui est fournie par le terminal 20 et on suppose qu'il exécute des fonctions cryptographiques (par exemple, au moyen du bloc 16, figure 2). Les attaques par analyse du rayonnement électromagnétique consistent à approcher du circuit électronique 10 une antenne 35 de faible dimension (dont la taille du capteur est inférieure à celle du circuit à examiner) pour détecter un rayonnement électromagnétique. Ce rayonnement est exploité par un système informatique, par exemple, un micro-ordinateur 30 (PC). Le rayonnement électromagnétique d'un circuit électronique étant localement différent selon les éléments en fonctionnement, la connaissance de l'algorithme mis en oeuvre (qui est généralement accessible par des normes) permet d'interpréter les rayonnements pour en déduire les quantités manipulées. A la différence des attaques par analyse de la consommation ou du temps d'exécution, les attaques par mesures du rayonnement évitent un contact avec le circuit. De plus, la mesure est plus localisée qu'une mesure de consommation du circuit intégré ou du temps d'exécution.

Les systèmes connus de contre-mesure contre des attaques par analyse temporelle ou par analyse de la consommation du circuit sont le plus souvent inefficaces contre des attaques électromagnétiques, précisément en raison de la capacité de ces attaques à localiser la mesure.

Les algorithmes manipulant des clés ou quantités que l'on souhaite protéger contre d'éventuels piratages se répartissent en deux grandes catégories.

Une première catégorie concerne les algorithmes à clés publiques tels que les algorithmes RSA, DSA et EC-DSA. De tels algorithmes mettent en oeuvre un calcul d'exponentiation (généralement par une technique dite de carré et multiplication "square & multiply") ou des calculs sur des courbes elliptiques (appliquant une technique dite arbitrairement addition et doublement "add & double"). Dans tous les cas, le calcul est différent selon les états des bits de la quantité secrète.

Dans l'exemple d'un calcul d'exponentiation utilisant une technique de carré et multiplication, l'étape de multiplication n'est effectuée que pour les bits de l'exposant à l'état 1. Par conséquent, une implémentation non protégée d'un tel calcul est aisément piratable. Il suffit à un fraudeur de surveiller l'exécution d'une étape pour déterminer directement l'état du bit de la clé.

La figure 4 représente, de façon très schématique et sous forme de blocs, un organigramme illustrant l'exécution d'un calcul d'exponentiation par la technique de carré et multiplication, mettant en oeuvre une protection contre des attaques par analyse temporelle et par analyse de la consommation du circuit électronique.

Les données d'entrée sont un message M à chiffrer et une clé e de chiffrement, exprimée sous la forme d'une succession de bits eₘ₋₁, ... e₀.

Une première étape (bloc 31, i=m-1 ; R0=1) consiste à initialiser un compteur d'index i au nombre de bits moins 1 de la quantité e et une variable résultat R0, par exemple stockée dans un registre résultat, à l'unité.

Le calcul s'effectue en boucle tant qu'il reste un bit d'exposant à traiter, partant par exemple du bit de poids fort m et en décrémentant l'index i (bloc 32, i=i-1) tant que cet indice n'est pas nul (test 33, i=0 ?). Lorsque l'index i est nul (sortie Y du test 33), le calcul est terminé et la variable e résultat R0 fournit la valeur M. Cette exponentiation est généralement modulaire.

A chaque itération de la boucle, on commence (bloc 34, R0=R0*R0) par élever au carré le contenu de la variable R0. Puis (test 35 eᵢ=1 ?), selon l'état du bit courant de l'exposant, le résultat de la multiplication de la variable R0 par le message M met à jour (bloc 36, R0=R0*M) cette variable R0 elle-même (cas d'un bit courant à l'état 1) ou met à jour (bloc 37, R1=R0*M) une variable R1 inutile au résultat final (cas d'un bit courant à l'état 0).

L'opération de multiplication 37, inutile au résultat, sert non seulement à équilibrer la durée d'exécution de l'algorithme quel que soit les états des bits de la quantité secrète à traiter et également à équilibrer sa consommation.

Toutefois, un tel algorithme reste sensible aux attaques par mesure de rayonnement électromagnétique. Ces attaques apportant une information locale du fonctionnement du circuit, permettent de déterminer quel registre de stockage est modifié entre deux registres respectivement affectés aux valeurs R0 et R1, révélant ainsi la valeur du bit courant de l'exposant.

On pourrait penser introduire une quantité aléatoire dans l'exposant de façon à masquer sa valeur. Une telle solution ne suffit pas car une analyse du rayonnement permettrait de découvrir la valeur brouillée de l'exposant. Cette valeur reste exploitable par un fraudeur s'il connaît le procédé de brouillage.

Une deuxième catégorie d'algorithmes de cryptographie concerne les algorithmes dits à clés secrètes, par exemple l'algorithme DES ou l'algorithme AES.

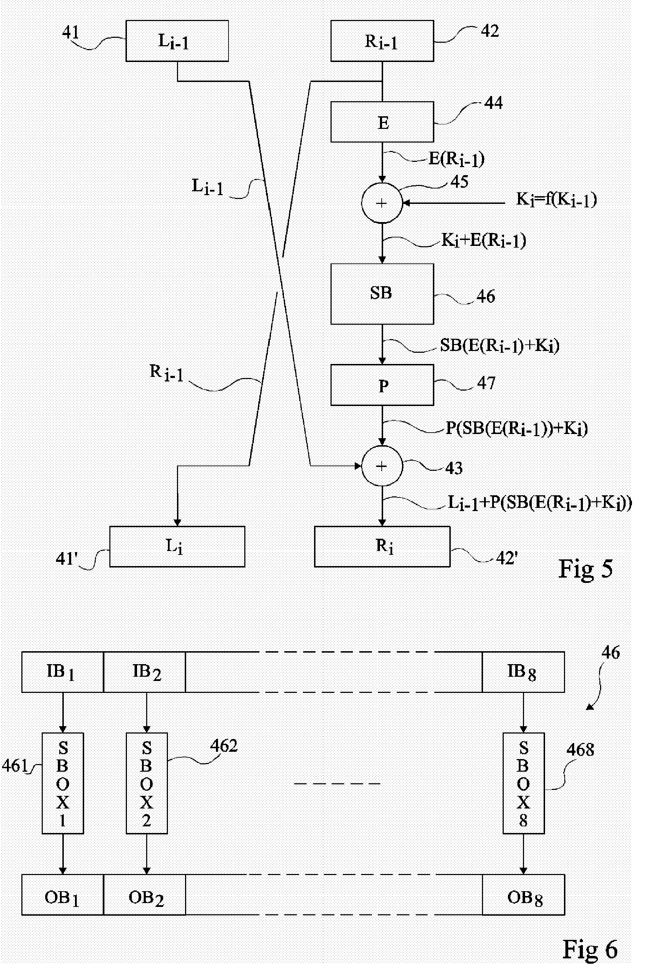

La figure 5 illustre, de façon très schématique et sous forme de blocs, une itération d'un algorithme DES. L'algorithme DES comporte plusieurs itérations d'opérations identiques en utilisant des sous-clés différentes à chaque tour qui sont obtenues à partir d'une clé secrète. Pour simplifier, seule une itération intermédiaire est représentée en figure 5.

La donnée courante à manipuler correspond, hormis pour la première itération non représentée, au résultat de l'itération précédente. Cette donnée est divisée en parties gauche Lᵢ₋₁ (bloc 41) et droite Rᵢ₋₁ (bloc 42) stockées dans des registres de taille identique et, à la fin de l'itération, ces registres contiennent respectivement les parties gauche Li (bloc 41') et droite Rᵢ (bloc 42'). La quantité Lᵢ est égale à la quantité Rᵢ₋₁. La quantité Rᵢ correspond à l'addition bit à bit (combinaison par un OU-Exclusif) de la quantité Lᵢ₋₁ au résultat de transformations opérées sur la quantité Rᵢ₋₁. Une première transformation 43 est une expansion E de la quantité Rᵢ₋₁ qui fournit une quantité E(Rᵢ₋₁). Cette expansion est combinée bit à bit par une combinaison 45 de type OU-Exclusif avec une sous-clé Ki générée pour l'itération courante. Cette sous-clé dépend, entre autres, de la sous-clé précédente Kᵢ₋₁ (Kᵢ=f(Kᵢ₋₁)) et est fournie par une fonction f de génération de sous-clés prenant en compte la clé secrète pour générer la première sous-clé. Le résultat Kᵢ+E(Rᵢ₋₁) de la combinaison 45 est soumis à une fonction 46 (SB) de substitution de valeurs. Le résultat SB(E(Rᵢ₋₁))+Kᵢ) de la fonction 46 est soumis à une permutation 47 (P) et le résultat P(SB(E(Rᵢ₋₁))+Kᵢ) de cette permutation est combiné par la fonction 43 à la partie gauche Lᵢ₋₁.

La figure 6 illustre, de façon très schématique et sous forme de blocs, un exemple de fonction de substitution 46 dans le cas de l'algorithme DES. La donnée d'entrée (sortie de la combinaison 45, figure 5) est découpée dans cet exemple en huit mots de 6 bits chacun IB₁ à IB₈. Huit tables 461 à 468 (SBOX1 à SBOX8) substituent chacune un mot de 4 bit au mot de 6 bit qu'elles reçoivent. Chaque table prend en entrée le mot de 6 bits comme index et retourne la valeur présente à cet index dans la table. Dans l'exemple du DES, chaque table de substitution est constituée de 64 éléments de quatre bits chacun permettant de fournir une valeur de 4 bits pour chacune des 2⁶ entrées possibles. Les résultats fournis par les tables de substitution 461 à 468 se présentent sous la forme de 8 mots OB₁ à OB₈ de quatre bits chacun.

Comme dans le cas des algorithmes à clés publiques, les tables de substitution fournissent des valeurs conditionnées par la clé. Une analyse électromagnétique localisée sur les tables de substitution peut permettre de remonter à la quantité secrète manipulée en exploitant les registres activés lors de la substitution qui dépendent de la donnée d'entrée IB, donc de la sous-clé.

Le document EP-1 548 687 décrit un procédé dans lequel un registre contenant le résultat est sélectionné parmi deux registres impliqués dans le calcul. Aucun déplacement de valeur n'est effectué.

### Résumé de l'invention

La présente invention vise à pallier tout ou partie des inconvénients des procédés connus de masquage de quantités numériques manipulées par un circuit électronique.

L'invention vise plus particulièrement à protéger une ou plusieurs quantités numériques lors de leurs manipulations par un circuit contre des attaques de type par canaux cachés.

L'invention vise plus particulièrement des attaques par analyse du rayonnement électromagnétique du circuit.

L'invention vise également une solution n'affaiblissant pas la résistance du calcul contre des attaques par analyse de la consommation ou par analyse temporelle.

L'invention vise également une solution applicable à des algorithmes à clés publiques et à clés secrètes.

Pour atteindre tout ou partie de ces objets ainsi que d'autres, la présente invention prévoit un procédé de masquage d'une quantité numérique utilisée par un calcul exécuté par un circuit électronique et comportant plusieurs itérations comportant chacune au moins une opération fonction d'au moins une valeur dépendant de ladite quantité numérique, le procédé comportant au moins une première étape de déplacement d'au moins un opérande de l'opération dans un élément de mémorisation choisi indépendamment de ladite valeur.

Selon un mode de mise en oeuvre de la présente invention, le procédé comporte au moins une deuxième étape de déplacement d'au moins un résultat de l'opération dans un élément de mémorisation choisi indépendamment de ladite valeur dépendant de la quantité numérique.

Selon un mode de mise en oeuvre de la présente invention, lesdites étapes de déplacement sont effectuées au moins avant et après chaque exécution de ladite opération.

Selon un mode de mise en oeuvre de la présente invention, ladite opération est une opération de multiplication d'un calcul d'exponentiation par une technique de carré et multiplication, ladite valeur étant un bit de l'exposant.

Selon un mode de mise en oeuvre, la présente invention est appliquée à un algorithme RSA ou DSA.

Selon un mode de mise en oeuvre de la présente invention, ladite opération est une opération de substitution, ladite valeur servant d'index de sélection des opérandes substitués.

Selon un mode de mise en oeuvre de la présente invention, ladite étape de déplacement est effectuée à chaque itération.

Selon un mode de mise en oeuvre, la présente invention est appliquée à un algorithme DES ou AES.

Selon un mode de mise en oeuvre de la présente invention, l'élément de mémorisation est sélectionné de façon aléatoire parmi un ensemble d'éléments disponibles.

L'invention prévoit également un circuit électronique.

L'invention prévoit également une carte à puce comportant un tel circuit.

### Brève description des dessins

Ces objets, caractéristiques et avantages, ainsi que d'autres de la présente invention seront exposés en détail dans la description suivante de modes mise en oeuvre et de réalisation particuliers, faite à titre non-limitatif en relation avec les figures jointes parmi lesquelles:
la figure 1 décrite précédemment représente une carte à puce du type auquel s'applique à titre d'exemple la présente invention ;
la figure 2 décrite précédemment représente de façon très schématique et sous forme de blocs, un exemple de circuit électronique du type auquel s'applique la présente invention ;
la figure 3 décrite précédemment illustre une technique d'attaque par analyse électromagnétique d'un calcul effectué par un circuit électronique ;
la figure 4 décrite précédemment est un organigramme décrivant un exemple classique de mise en oeuvre d'un calcul d'exponentiation par une technique de carré et multiplication ;
la figure 5 décrite précédemment représente de façon très schématique et sous forme de blocs une itération d'un algorithme DES ;
la figure 6 illustre, de façon très schématique et sous forme de blocs, l'exécution d'une fonction de substitution dans un algorithme à clé secrète ;
la figure 7 est un organigramme illustrant un mode de mise en oeuvre de la présente invention appliqué à un calcul d'exponentiation ;
la figure 8 est un organigramme partiel illustrant une variante appliquée au calcul d'exponentiation ; et
la figure 9 représente, de façon très schématique et sous forme de blocs, un mode de mise en oeuvre de l'invention appliqué à des tables de substitution d'un algorithme DES.

De mêmes éléments ont été désignés par de mêmes références aux différentes figures. Pour des raisons de clarté, seuls les étapes et éléments qui sont utiles à la compréhension de l'invention ont été représentés aux figures et seront décrits par la suite. En particulier, l'exploitation des calculs traités par la présente invention n'a pas été détaillée, l'invention étant compatible avec toute exploitation classique de calculs algorithmiques à clé publique ou à clé secrète.

### Description détaillée

Une caractéristique de la présente invention est d'organiser un déplacement d'un ou plusieurs opérandes d'un calcul algorithmique dans différents éléments de mémorisation sélectionnés indépendamment d'une valeur dépendant d'une quantité numérique (secrète) à protéger. De préférence, cette sélection est aléatoire. Dans un mode de réalisation simplifié, l'invention prévoit une permutation aléatoire entre les contenus respectifs de deux éléments de mémorisation stockant des opérandes ou des résultats intermédiaires.

Les éléments de mémorisation peuvent être des registres ou plus généralement n'importe quels éléments de mémorisation adressables, l'adresse de l'élément de mémorisation utilisé ou un pointeur étant stocké pour retrouver les contenus ultérieurement.

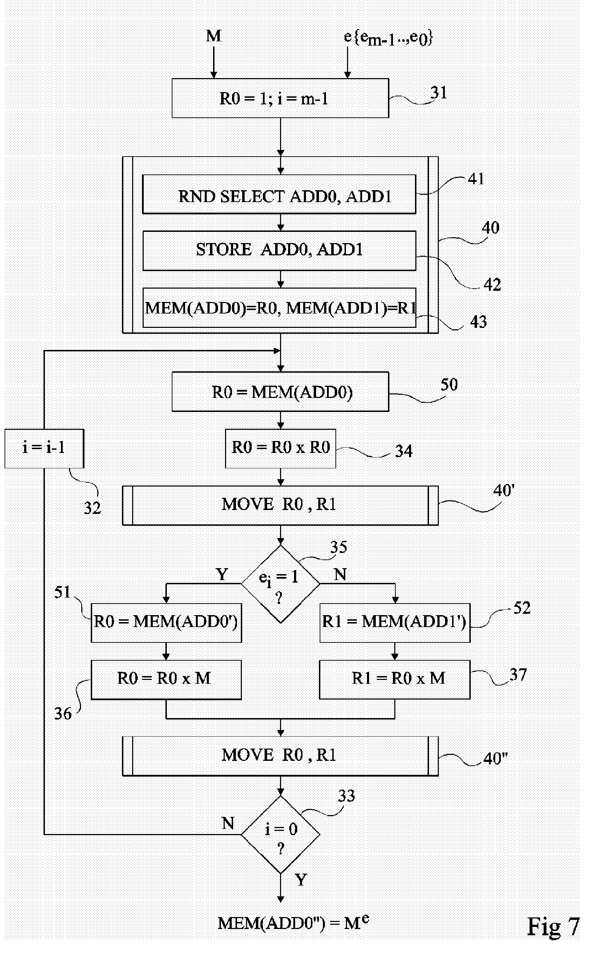

La figure 7 est un organigramme illustrant un mode de mise en oeuvre de la présente invention, appliqué à un calcul d'exponentiation.

Comme précédemment, le calcul reçoit en entrée une donnée M à soumettre à une exponentiation par un exposant e, fonction d'une quantité secrète et exploité sous la forme d'un ensemble de m bits eₘ₋₁ à e₀. Une variable R₀ est initialisée à l'unité et un index d'itération i est initialisé à m-1 (bloc 31, R0=1 ; i=m-1). Dans un mode de réalisation préféré, une deuxième variable R1 est utilisée pour masquer l'exécution en temps et en consommation.

Selon ce mode de réalisation de l'invention, des étapes (bloc 40) organisent un stockage des variables R0 et R1. Ces étapes comprennent successivement une sélection aléatoire d'adresses (bloc 41, RNDSELECT ADD0, ADD1) de stockage des deux variables R0 et R1. Les adresses sont sélectionnées aléatoirement dans une plage d'adresses autorisées, par exemple dans une plage de stockage possible dans une mémoire vive ou dans un groupe de registres sélectionnables. Dans le cas où plus de deux adresses sont disponibles, c'est-à-dire que l'on ne se contente pas d'une permutation, ces adresses sont mémorisées (bloc 42, STORE ADD0, ADD1), par exemple dans des registres dédiés. Le fait que les adresses elles-mêmes soient stockées en clair n'affecte pas la sécurité des données manipulées comme on le verra par la suite. Puis, le contenu de la variable R0 est mémorisé à l'adresse ADD0 et le contenu de la variable R1 est mémorisé à l'adresse ADD1 (bloc 43, MEM (ADD0) =R0, MEM (ADD1) =R1) . Cette mémorisation utilise le cas échéant des registres intermédiaires, c'est-à-dire que les valeurs R0 et R1 restent contenues dans des registres temporaires dédiés (par exemple en entrée et/ou en sortie d'opérateurs en logique câblée) avant transfert vers les éléments de mémorisation des adresses ADD1 et ADD0. Ces éléments peuvent d'ailleurs être ces registres, pourvu de disposer d'un troisième élément pour effectuer la permutation entre les contenus des deux registres temporaires.

Commencent ensuite les itérations de l'algorithme sur la variable résultat R0.

Chaque itération commence par une lecture 50 (R0=MEM(ADD0)) du contenu de l'adresse ADD0 pour obtenir la variable R0. Puis, l'étape classique 34 d'élévation au carré (R0=R0*R0) est effectuée. De préférence, un processus de déplacement aléatoire en mémoire est effectué à l'issue de l'étape 34. Ce processus est illustré de façon globale par un bloc 40' (MOVE R0, R1) et reprend les étapes 41, 42, 43 décrites ci-dessus.

Le test 35 sur le bit de l'exposant (eᵢ=1 ?) est effectué pour conditionner les étapes suivantes. Dans le cas d'un bit à l'état 1, la variable R0 est chargée (bloc 51, R0=MEM(ADD0')) avec le contenu de l'adresse ADD0' qui correspond à celle sélectionnée à l'étape 40'. Puis, l'étape 36 de multiplication (R0=R0*M) est exécutée. Dans le cas d'un bit d'exposant à l'état 0, la variable R1 est chargée avec le contenu de l'adresse ADD1' sélectionné à l'étape 40' (bloc 52, R1=MEM(ADD1')). Puis, l'étape 37 de masquage de temps et de consommation (R1=R0*M) est exécutée.

Enfin, avant d'effectuer le test 33 (i=0 ?) sur la fin du calcul, un déplacement aléatoire 40" des variables R0 et R1 est de préférence effectué.

Le reste du processus est identique à celui exposé en relation avec la figure 4 à savoir un décrément (bloc 32, i=i-1) de l'indice tant que celui-ci n'est pas nul. En fin de calcul, l'adresse ADD0" sélectionnée à la dernière étape 40" fournit le résultat M^{e}.

En variante, la lecture des éléments de mémorisation pour récupérer une des variables R0 ou R1 (blocs 50, 51 et 52) est remplacée par une lecture des deux variables à chaque fois.

Selon une autre variante, la première étape 40 de déplacement est omise.

Un avantage du mode de mise en oeuvre de la figure 7 est que des mesures localisées de rayonnement électromagnétique du circuit au niveau de registres ou d'éléments de mémorisation stockant les variables R0 et R1 lors de l'exécution du calcul 34, 36 ou 37 ne permettent pas de déterminer l'état du bit courant de la quantité secrète. Le fait de déplacer en mémoire les variables R0 et R1 avant et après l'opération de traitement du bit de l'exposant, quel que soit l'état de ce bit, empêche de déterminer la variable R1 ou R0 mise à jour, donc si l'opération effectuée est l'opération 36 ou 37.

Le fait de déplacer les variables à chaque itération avant et après l'opération sensible évite qu'une observation comparative du calcul 34 par rapport au calcul 36 ou 37 permette de différencier la multiplication faite avec la variable R1 de celle faite avec la variable R0.

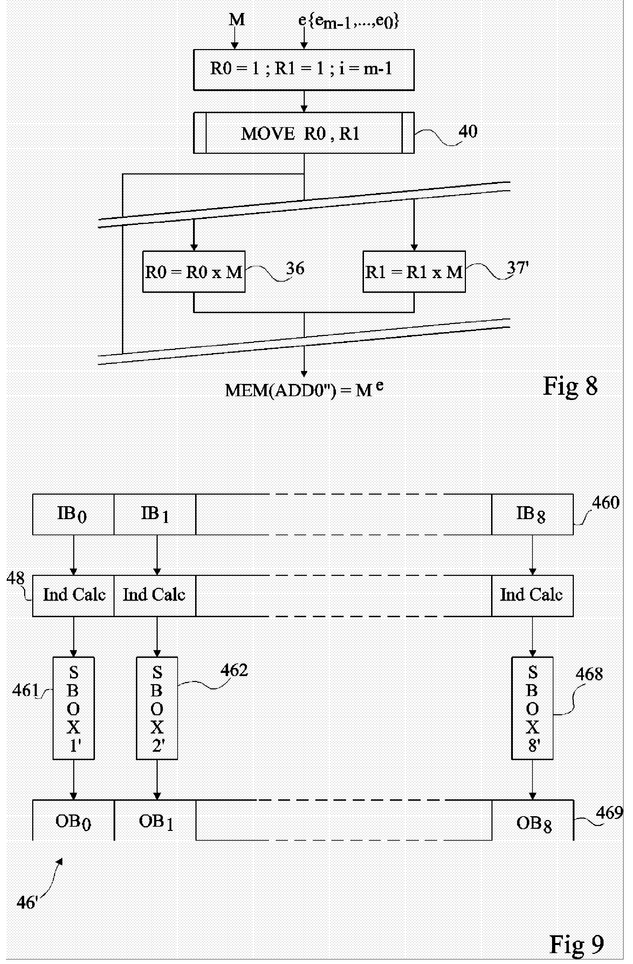

La figure 8 illustre, par un organigramme partiel, une variante du procédé de l'invention appliqué à un calcul de carré et multiplication. Selon cette variante, l'étape 37 de mise à jour de la variable R1 est remplacée par une étape 37' dans laquelle le message M est multiplié par le contenu précédent de la variable R1 au lieu que ce soit par le contenu de la variable R0. Le reste des étapes est identique à celles exposées en relation avec la figure 7.

Un avantage de cette variante est que cela protège l'exécution de l'algorithme même si un fraudeur est capable de déterminer, par observation électromagnétique, si l'opérande de la multiplication est placé, avant déplacement, au même endroit que le résultat. Une telle observation pourrait, dans le mode de mise en oeuvre de la figure 7, permettre de déterminer si le circuit effectue l'opération 36 ou 37 et donc de trouver un bit de l'exposant. En plaçant toujours temporairement le résultat au même endroit que l'opérande, le mode de mise en oeuvre de la figure 8 permet de parer une telle attaque éventuelle.

Selon un mode de réalisation simplifié, le déplacement aléatoire des variables peut consister en un échange aléatoire des données R0 et R1 entre deux éléments de mémorisation. Dans ce cas, le stockage de l'adresse de mémorisation peut être simplifié comme un simple drapeau ou pointeur pour déterminer si le premier registre contient la valeur R0 et le deuxième la valeur R1 ou inversement.

La mise en oeuvre de l'invention requiert de savoir en permanence où sont stockées les variables, donc à stocker les adresses ADD0 et ADD1 (ou un bit drapeau en cas de simple permutation). Le fait que l'adresse ou que le drapeau soit lisible par l'attaquant ne fournit cependant aucune information sur la quantité manipulée car la sélection du lieu de mémorisation des variables n'a pas de lien avec cette quantité.

La figure 9 illustre, de façon très schématique et sous forme de blocs, un mode de mise en oeuvre de l'invention appliqué à un algorithme à clé secrète de type DES. Dans cet exemple, on suppose un traitement 46' dans des tables de substitution d'un algorithme DES traitant une donnée d'entrée 460 découpée en huit mots IB₁ à IB₈ (par exemple de 6 bits chacun) et fournissant une donnée de sortie 469 constituée de huit mots OB₁ à OB₈ (par exemple de 4 bits chacun). Selon ce mode de réalisation de l'invention, les éléments des tables de substitution 461 à 468 (SBOX1' à SBOX8') qui constituent les éléments sensibles pour la sécurité des données manipulées sont soumis à une permutation aléatoire (ou à un déplacement à des adresses sélectionnées aléatoirement). Une telle manipulation des valeurs nécessite de pourvoir déterminer l'index d'un élément dans la table, ce qui revient à un adressage à la manière du procédé exposé ci-dessus en relation avec la technique du carré et multiplication. Cette fonctionnalité est illustrée en figure 9 par l'insertion, entre chaque mot d'entrée et la table qui lui est associée, d'un bloc 48 de calcul d'index ou de conversion d'index en fonction de la manipulation effectuée sur les éléments de la table. Là encore, la conversion de l'index du bloc 48 ne fournit pas d'indication sur la quantité secrète manipulée.

Le déplacement des éléments des tables peut être effectué à chaque nouvelle exécution de l'algorithme ou à chaque tour (itération).

Bien entendu, la présente invention est susceptible de diverses variantes et modifications qui apparaîtront à l'homme de l'art. En particulier, bien qu'elle ait été plus particulièrement décrite en relation avec une technique de carré et multiplication, l'invention s'applique à tout algorithme stockant temporairement un ou plusieurs opérandes (variables R0, R1 ou une valeur renvoyée par une SBOX) d'une opération dont l'exécution dépend directement (bit de l'exposant e) ou indirectement (index de sélection dans la SBOX) d'une quantité numérique à protéger. Par exemple, l'invention s'applique à des calculs connus sous les noms "exponentiations", "k.P" dans les courbes elliptiques, "tables de substitutions". De plus, l'invention est compatible avec tout autre contre-mesure, par exemple avec les procédés introduisant des quantités aléatoires dans les valeurs manipulées. En outre, la mise en oeuvre pratique de l'invention est à la portée de l'homme du métier à partir des indications fonctionnelles données ci-dessus en utilisant des outils matériels et/ou logiciels en eux-mêmes classiques.

## Revendications

1. Procédé de masquage d'une quantité numérique (e ; K) utilisée par un calcul exécuté par un circuit électronique (10) et comportant plusieurs itérations comportant chacune au moins une opération (36, 37 ; 46) fonction d'au moins une valeur dépendant de ladite quantité numérique, **caractérisé en ce qu'**il comporte au moins une première étape (40') de déplacement d'au moins un opérande (R0, R1 ; SBOX) de l'opération dans un élément de mémorisation (13) choisi (ADD0) indépendamment de ladite valeur.

2. Procédé selon la revendication 1, comportant au moins une deuxième étape (40") de déplacement d'au moins un résultat (R0, R1) de l'opération (36, 37) dans un élément de mémorisation (13) choisi (ADD1) indépendamment de ladite valeur dépendant de la quantité numérique.

3. Procédé selon la revendication 2, dans lequel lesdites étapes de déplacement sont effectuées au moins avant et après chaque exécution de ladite opération (36, 37).

4. Procédé selon l'une quelconque des revendications 2 et 3, dans lequel ladite opération (36, 37) est une opération de multiplication d'un calcul d'exponentiation par une technique de carré et multiplication, ladite valeur étant un bit de l'exposant (e).

5. Procédé selon l'une quelconque des revendications 1 à 4 appliqué à un algorithme RSA ou DSA.

6. Procédé selon la revendication 1, dans lequel ladite opération (46) est une opération de substitution, ladite valeur servant d'index de sélection des opérandes (SBOX) substitués.

7. Procédé selon la revendication 6, dans lequel ladite étape de déplacement est effectuée à chaque itération.

8. Procédé selon l'une quelconque des revendications 1, 6 et 7, appliqué à un algorithme DES ou AES.

9. Procédé selon l'une quelconque des revendications 1 à 8, dans lequel l'élément de mémorisation est sélectionné de façon aléatoire parmi un ensemble d'éléments disponibles.

10. Circuit électronique comportant des moyens pour la mise en oeuvre du procédé selon l'une quelconque des revendications 1 à 9.

11. Carte à puce comportant un circuit selon la revendication 10.
